# EUROPÄISCHE PATENTSCHRIFT

(11) **EP 0 919 424 B1**
(45) Veröffentlichungstag und Bekanntmachung des Hinweises auf die Patenterteilung: **24.07.2002**
(21) Anmeldenummer: 98120342.5
(22) Anmeldetag: 28.10.1998
(51) Int. Cl.: B60K 41/24, B60T 1/02

(54) **Verfahren zur Überdrehzahlsicherung eines Dieselmotors bei falscher Gangwahl**
Method for preventing overspeed of a diesel engine in case of gear shift error
Système pour éviter la survitesse d'un moteur diesel dans le cas d'une erreur de sélection de vitesse

(30) Priorität: 01.12.1997 DE 19753214
(43) Veröffentlichungstag der Anmeldung: 02.06.1999
(73) Patentinhaber: MAN Nutzfahrzeuge Aktiengesellschaft, 80976 München (DE)
(72) Erfinder: Schaller, Karl-Viktor, Dr.-Ing., 82194 Gröbenzell (DE)

(56) Entgegenhaltungen:
- DE-A- 4 326 862
- US-A- 4 787 044

## Beschreibung

Die Erfindung betrifft ein Verfahren zur Überdrehzahlsicherung eines in einem Lastkraftwagen oder Omnibus eingebauten Dieselmotors.

Bei mechanischen Schalteinrichtungen ohne Schalthilfe für Wechselgetriebe kann der Fahrer bei einer falschen Gangwahl den Gang nur sehr schwer oder überhaupt nicht einlegen. Dadurch merkt der Fahrer rechtzeitig, daß er eine falsche Gangwahl getroffen hat

Manuell betätigbare Schalteinrichtungen für Wechselgetriebe haben immer häufiger eine mechanische oder pneumatische Schalthilfe, mittels derer, auch bei falscher Gangwahl, der Gang ohne große Kräfte am Schalthebel einlegbar ist

Dem Fahrer wird damit ein großer Komfort geboten, das Gefühl zum Getriebe geht aber verloren. Hinzu kommt, daß die Fahrerhaus-lsolierungen immer besser werden und das Motorgeräusch im Fahrerhaus bei Fremdschallereignissen, wie beispielsweise ein laut eingestelltes Radio, Fahrbahngeräusche bei geöffnetem Fenster oder Regengeräusche, leicht untergeht. Es kann so zu Fehlschaltungen wie vom 8. Gang auf den 5. Gang anstatt des 7. Ganges durch falsche Gassenwahl kommen. Wird nach dieser Fehlschaltung eingekuppelt, so kann der Dieselmotor durch Überdrehzahl zerstört werden.

Bei elektrisch/elektronisch schaltbaren Wechselgetrieben mit "joy stick" wird bei einer falschen Gangwahl der Gang nicht eingelegt, um eine Überdrehzahl des Dieselmotors zu vermeiden. Es wird lediglich die Fehlwahl des Ganges dem Fahrer angezeigt.

In der DE-A-43 26 862 wird ein Verfahren beschrieben, mit dem eine Überdrehzahlsicherung einer in einem Kraftfahrzeug eingebauten Brennkraftmaschine erreicht wird. Es sind ohne Zweifel eine elektronisch geregelte Treibstoffzumessung und eine Kupplung sowie eine mechanische oder pneumatische Schalthilfe für das Schalten des Wechselgetriebes vorhanden. Im Falle einer falschen Gangwahl und einem daraus resultierenden Hochlauf der Drehzahl der Brennkraftmaschine wird durch Signale aus einem Bordcomputer, kurz vor Erreichen einer oberen kritischen Drehzahl, die Kupplung derart schleifend gesteuert, daß die Getriebedrehzahl die durch die kritische, d.h. die maximal zulässige Drehzahl der Brennkraftmaschine bestimmte Drehzahlschwelle unterschreitet. Der Vorgang wird solange wiederholt, bis die Fahrzeuggeschwindigkeit so reduziert ist, daß mit dem eingelegten Gang keine kritische Überdrehzahl der Brennkraftmaschine mehr erreicht wird. Eine Beinflussung der Brennkraftmaschine über eine Motorbremse findet nicht statt.

Der Erfindung liegt die Aufgabe zugrunde, bei einer mechanisch oder pneumatisch unterstützten Handschalteinrichtung für Wechselgetriebe bei einer Fehlschaltung. oder einer Fehlschaltung durch beabsichtigtes Hochdrehen des Dieselmotors, wegen des Ausnützens der Bremsleistung der Motorbremse und gegebenenfalls der eines Primärretarders, ein Überdrehen des Dieselmotors zu vermeiden.

Die Aufgabe wird durch das erfindungsgemäße Verfahren gelöst.

Dadurch, daß durch Signale aus dem Bordcomputer, der die Drehzahl des Dieselmotors ständig registriert, kurz vor Erreichen einer kritischen Drehzahl, die Kupplung geöffnet und die Motordrehzahl durch die Motorbremse und gegebenenfalls durch einen Primärretarder abgesenkt wird, wird eine Überdrehzahl verhindert Mit der Motorbremse und gegebenenfalls mit einem Primärretarder ist der Motor sehr schnell auf eine untere Grenzdrehzahl abbremsbar. Der Vorgang insgesamt, also das Auskuppeln und das Abbremsen des Motors, ist ein sehr schneller Vorgang.

Ist der gleiche Gang immer noch eingelegt, dies kann der Fall sein, wenn der Fahrer nicht schnell genug reagiert, wird erfindungsgemäß durch Signale aus dem Bordcomputer, nach Erreichen einer unteren Grenzdrehzahl, automatisch wieder eingekuppelt und dadurch der Dieselmotor wieder soweit hochgedreht, bis kurz vor Erreichen einer kritischen Drehzahl automatisch, wie eingangs beschrieben, wieder ausgekuppelt wird.

Beim Einkuppelvorgang sind die Motorbremse und gegebenenfalls der Primärretarder abgeschaltet, so daß der Einkuppelvorgang schnell gehen kann. Der Hochschleppvorgang des Dieselmotors hat trotzdem einen hohen Kupplungsverschleiß zur Folge. Fährt das Fahrzeug auf einer horizontalen Fahrbahn und hat sich der Fahrer tatsächlich nur verschaltet, so wird er spätestens dann, nachdem der Dieselmotor von der unteren Grenzdrehzahl hin zur oberen Grenzdrehzahl geschleppt wurde, merken, daß er den falschen Gang eingelegt hat und er wird nun den richtigen Gang einlegen.

In einem solchen Fall ist dann die Aktivität des erfindungsgemäßen Verfahrens beendet.

Es kann aber auch die falsche Gangwahl durch den Fahrer getroffen werden, wenn er die maximal mögliche Motorbremsleistung, die nur bei hohen Motordrehzahlen erreichbar ist, nutzen muß oder will. In dem eingelegten Gang hat er möglicherweise nicht die gewünschte Bremsleistung, schaltet er einen oder zwei Gänge herunter, ist die Drehzahl des Dieselmotors vielleicht schon im gefährlichen Überdrehzahlbereich.

In diesem Fall wirkt das erfindungsgemäße Verfahren - Auskuppeln kurz vor Erreichen einer oberen kritischen Drehzahl, Abbremsen der Drehzahl des Dieselmotors durch die Motorbremse und gegebenenfalls durch einen Primärretarder bis zu einer unteren Grenzdrehzahl, Einkuppeln mit Hochschleppen des Dieselmotors, wobei Motorbremse und gegebenenfalls Primärretarder deaktiviert sind, Auskuppeln des Dieselmotors kurz vor Erreichen einer oberen kritischen Drehzahl usw. - solange, bis in dem eingelegten Gang eine nicht mehr kritische obere Drehzahl erreicht wird. Wenn dies erreicht ist, ist die Aktivität des erfindungsgemäßen Verfahrens beendet.

Wenn der Bordcomputer aber feststellt, daß die Fahrzeuggeschwindigkeit nicht niedriger wird, wird zusätzlich der Sekundärretarder aktiviert undloder die Betriebsreibungsbremse durch Signale aus dem Bordcomputer eingelegt und eine oder beide Bremsen aktiv gehalten, bis das Fahrzeug verzögert wird und im eingelegten Gang keine kritische Drehzahl des Dieselmotors mehr auftritt. Die Motorbremse und gegebenenfalls ein Primärretarder können dann im eingelegten Gang bei der höchsten, noch zulässigen Drehzahl des Dieselmotors wirken. Die Maßnahme ist eine Sicherungsmaßnahme gegen ein unkontrolliertes Weglaufen des Fahrzeugs.

## Patentansprüche

1. Verfahren zur Überdrehzahlsicherung eines in einem Lastkraftwagen oder Omnibus eingebauten Dieselmotors mit elektronisch geregelter Treibstoffzumessung, mit einer Motorbremse und gegebenenfalls wenigstens einem Retarder sowie mit einer Betriebsbremse und einer Kupplung, mit mechanischer oder pneumatischer Schalthilfe für das Schalten des Wechselgetriebes und mit einem Bordcomputer, wobei im Falle einer falschen Gangwahl und einem daraus resultierenden Hochlauf der Drehzahl des Dieselmotors durch Signale aus dem Bordcomputer, kurz vor Erreichen einer oberen kritischen Drehzahl, die Kupplung geöffnet und die Drehzahl des Dieselmotors durch Aktivieren der Motorbremse und gegebenenfalls eines Primärretarders bis zu einer unteren Grenzdrehzahl herabgebremst und dann, ohne daß die Betriebsbremse aktiviert ist, wieder eingekuppelt wird, wodurch der Dieselmotor wieder hochgedreht wird und sich der Vorgang solange wiederholt, bis der Fahrer einen anderen Gang einlegt oder die Fahrzeuggeschwindigkeit so reduziert ist, daß mit dem eingelegten Gang keine kritische Überdrehzahl des Dieselmotors mehr erreicht wird.

2. Verfahren zur Überdrehlzahlsicherung nach Anspruch 1, **dadurch gekennzeichnet, daß** dann, wenn der Bordcomputer feststellt, daß das Fahrzeug nicht langsamer wird, zusätzlich ein Sekundärretarder und/oder die Betriebsreibungsbremse durch Signale aus dem Bordcomputer aktiviert werden.

## Claims

1. Procedure for the overspeed protection of a diesel engine installed in a truck or bus and equipped with an electronically controlled fuel metering device, with an engine brake and, if necessary, with at least one retarder, with a service brake and a clutch, with a mechanical or pneumatic shifting aid for actuating the manual gearbox and with an on-board computer, whereby, if a wrong gear is selected and, as a result of this, the diesel engine revs up, signals are sent from the on-board computer, whereupon, shortly before an upper critical speed is reached, the clutch is disengaged and the speed of the diesel engine is lowered to a lower limit speed by the activation of the engine brake and, if fitted, of a primary retarder and then, without the service brake being activated, the clutch is re-engaged, whereupon the diesel engine revs up again, this procedure repeating itself until the driver engages a different gear or reduces the vehicle speed so that a critical overspeeding of the diesel engine is no longer reached with the gear engaged.

2. Procedure for overspeed protection according to Claim 1, **characterised in that** if the on-board computer notices that the vehicle does not slow down, a secondary retarder and/or the friction service brake are/is additionally activated by means of signals from the on-board computer.

## Revendications

1. Procédé de protection contre le sur-régime d'un moteur Diesel équipant un camion ou un autocar comportant un système de dosage de carburant à régulation électronique, un frein moteur et le cas échéant au moins un retardateur ainsi qu'un frein de fonctionnement et un embrayage, avec une assistance mécanique ou pneumatique pour commuter la boîte de vitesses et un ordinateur embarqué,
selon lequel en cas de mauvais choix de rapport de vitesses provoquant une montée en régime du moteur Diesel, des signaux émis par l'ordinateur de bord, juste avant d'atteindre un régime critique supérieur, ouvrent l'embrayage et freinent la vitesse de rotation du moteur Diesel en activant le frein moteur et le cas échéant un retardateur primaire jusqu'à un régime limite inférieur puis, sans que le frein de fonctionnement ne soit activé, on embraye de nouveau ce qui tire le moteur Diesel vers les régimes hauts et on répète l'opération jusqu'à ce que le conducteur se trouve dans un autre rapport ou que la vitesse du véhicule soit suffisamment réduite pour que le rapport utilisé ne produise plus de sur-régime critique du moteur Diesel.

2. Procédé de protection contre le sur-régime selon la revendication 1,
**caractérisé en ce que**
lorsque l'ordinateur de bord constate que le véhicule ne ralentit pas, il active en plus un retardateur secondaire et/ou le frein de fonctionnement par des signaux de l'ordinateur de bord.
